Europäisches Patentamt

European Patent Office

Office européen des brevets

(11) Veröffentlichungsnummer: **0 271 919 B1**

# EUROPÄISCHE PATENTSCHRIFT

(45) Veröffentlichungstag der Patentschrift: **04.12.91**

(21) Anmeldenummer: **87118831.4**

(22) Anmeldetag: **18.12.87**

(51) Int. Cl.⁵: **B01D 53/36**, B01J 23/22, B01J 23/24, B01J 23/34, B01J 23/82, B01J 23/85, B01J 23/88, B01J 37/03

(54) **Trägerkatalysator, Verfahren zu seiner Herstellung und seine Verwendung zur Reduktion von Stickoxiden.**

(30) Priorität: **19.12.86 DE 3643605**

(43) Veröffentlichungstag der Anmeldung:
**22.06.88 Patentblatt 88/25**

(45) Bekanntmachung des Hinweises auf die Patenterteilung:
**04.12.91 Patentblatt 91/49**

(84) Benannte Vertragsstaaten:
**AT BE CH DE ES FR GB IT LI NL SE**

(56) Entgegenhaltungen:
**DE-A- 2 617 744**
**FR-A- 2 212 171**
**FR-A- 2 223 072**
**US-A- 4 221 768**

(73) Patentinhaber: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Koschlig, Hans-Joachim, Dr.**
**Am Schamberge 10b**
**W-4630 Bochum-Dahlhausen(DE)**
Erfinder: **Hutter, Frank, Dr.**
**Randersackererstrasse 81**
**W-8700 Würzburg(DE)**
Erfinder: **Schmidt, Helmut, Dr.**
**Badstrasse 2**
**W-8705 Zellingen(DE)**

(74) Vertreter: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

**Beschreibung**

Die Erfindung betrifft einen Trägerkatalysator für die Stickoxidreduktion, ein Verfahren zu seiner Herstellung und seine Verwendung zur Reduktion von Stickoxiden in Verbrennungsabgasen.

Katalysatoren für die Entstickung von Abgasen aller Art werden in Folge des zunehmenden Umweltbewußtseins immer wichtiger. Derzeit wird insbesondere an technologischen Lösungen für die Entfernung von Stickoxiden aus den Abgasen von großen Verbrennungsanlagen, wie z.B. Kraftwerken, gearbeitet.

Das zur Zeit am weitesten entwickelte Verfahren ist das sogenannte SCR-(Selective Catalytic Reduction)-Verfahren, bei dem man dem Stickoxid-haltigen Abgasstrom Ammoniak zudosiert, der sich an geeigneten Katalysatoren mit dem Stickoxid zu Stickstoff und Wasser umsetzt. Die meisten Verfahren liegen in diesem Zusammenhang mit Katalysatoren vor, die aus Titandioxid mit Zuschlägen von Schwermetalloxiden, wie Wolframoxid oder Vanadinoxid, bestehen; siehe z.B. DE-B-24 58 888.

Die Nachteile dieser Katalysatoren liegen darin, daß die mechanischen und Erosionseigenschaften des keramischen Grundmaterials recht unbefriedigend sind (Standzeiten von 1 bis 3 Jahren), daß relativ große Mengen an teueren katalytisch aktiven Materialien verbraucht werden und daß aufgrund der hohen Schwermetallgehalte entsprechende Entsorgungsprobleme auftreten.

Im Rahmen umfangreicher Untersuchungen über die Entwicklung verbesserter Entstickungskatalysatoren, welche die genannten Nachteile nicht oder in geringerem Ausmaß aufweisen, haben die Erfinder die Verwendung kostengünstigerer poröser keramischer Trägermaterialien ins Auge gefaßt, die mit katalytisch aktiven Beschichtungen überzogen sind, die nur einen Bruchteil der Gesamtmasse des Trägerkatalysators ausmachen. Hierbei war Voraussetzung, daß die Trägermaterialien über eine ausreichende Porosität und dementsprechend große spezifische Oberfläche verfügen, um einen ausreichenden Umsatz zu gewährleisten. Dabei zeigte sich zunächst, daß das einfache Imprägnieren von keramischen Trägermaterialien mit Salzlösungen der katalytisch aktiven Komponenten nur zu sehr mäßigen Ergebnissen führt, weil die aktiven Komponenten beim Trocknungsprozeß durch die austretende Feuchtigkeit wieder an die Oberfläche des Trägerkatalysators transportiert werden. Auf diese Weise läßt sich somit keine ausreichend große aktive Oberfläche erzielen.

Überraschenderweise wurde nun gefunden, daß über den sogenannten Sol-Gel-Prozeß in den Poren eines festen porösen Trägerkörpers aktive Katalysatorbeschichtungen erzeugt werden können, die selbst eine gewisse Porosität aufweisen und dadurch zur Erhöhung der für katalytische Reaktionen zur Verfügung stehenden Oberfläche beitragen. Völlig überraschend war, daß die nach dem Sol-Gel-Prozeß in den porösen Trägerkörpern erzeugten aktiven Beschichtungen außerordentliche katalytische Aktivität besitzen, obwohl sie im wesentlichen amorph sind. Bisher wurde die katalytische Aktivität von Metalloxid-Katalysatoren, wie sie z.B. in der DE-B- 24 58 888 beschrieben sind, mit dem Vorliegen bestimmter kristalliner Phasen ($TiO_2$ als Anatas, kristallines $WO_3$ etc.) in der Katalysatorzusammensetzung in Verbindung gebracht.

Gegenstand der Erfindung ist somit ein Trägerkatalysator für die Stickoxidreduktion, der auf und in einem festen porösen Trägerkörper eine Metalloxide enthaltende, aktive Katalysatorbeschichtung aufweist, welche nach einem Sol-Gel-Verfahren hergestellt worden ist.

Gegenstand der Erfindung ist ferner ein Verfahren zur Herstellung dieses Trägerkatalysators, das dadurch gekennzeichnet ist, daß man

a) eine Lösung von löslichen und hydrolysierbaren Verbindungen

A) mindestens eines Elementes aus der Gruppe Al, Si und Ti;

B) mindestens eines Elementes aus der Gruppe V, Mn, Fe, Co und Ni;

C) mindestens eines Elementes aus der Gruppe Cr, Mo, W und Sn;

D) gegebenenfalls mindestens eines Elementes aus der Gruppe Mg, Cu, Zn, La, Ce und Gd;

wobei der Anteil dieser Komponenten, ausgedrückt als Atomprozent der Elemente, 50 bis 98 Prozent A), 1 bis 50 Prozent B), 0,5 bis 20 Prozent C) und 0 bis 5 Prozent D) und die Summe der Atomprozente 100% beträgt;

in einem organischen Lösungsmittel mit einer geringeren Wassermenge als der zur vollständigen Hydrolyse der Verbindungen stöchiometrisch erforderlichen Menge, gegebenenfalls in Gegenwart eines sauren oder basischen Katalysators, umsetzt;

b) gegebenenfalls das entstandene Vorkondensat mit der zur Hydrolyse der verbliebenen hydrolysierbaren Komponenten erforderlichen Wassermenge, gegebenenfalls in Gegenwart eines sauren oder basischen Katalysators, weiterkondensiert;

c) einen festen porösen Katalysator-Trägerkörper mit der Lösung des Vorkondensats aus Stufe a) oder des weiterkondensierten Produkts aus Stufe b) beschichtet, wobei im erstgenannten Fall eine Weiterkondensation des Vorkondensats auf dem beschichteten Trägerkörper durchgeführt wird; und

d) den beschichteten Trägerkörper trocknet und wärmebehandelt.

Schließlich ist Gegenstand der Erfindung die Verwendung dieses Trägerkatalysators zur Reduktion von Stickoxiden, insbesondere zur Entstickung von Verbrennungsabgasen.

Als Träger für den erfindungsgemäßen Trägerkatalysator eignen sich insbesondere poröse keramische Trägermaterialien, z.B. aus Cordierit, Mullit, Steinzeug, Aluminiumoxid und/oder Aluminiumtitanaten. Besonders bevorzugt sind die in den DE-A-36 32 321 und 36 32 322 beschriebenen Trägerkörper aus einem gebrannten keramischen Scherbenvon wabenförmiger Struktur mit einer freien (offenen) Querschnittsfläche von mindestens 80%. Der keramische Scherben weist eine möglichst geringe Eigenporosität auf, enthält aber Sekundärporen, die durch einen oder mehrere sogenannte Ausbrennstoffe gebildet worden sind. Die Sekundärporen sind dazu bestimmt, die Oberfläche zu vergrößern und ein Volumen zu schaffen, das von den durchströmten Längskanälen direkt zugängig ist und in welches die katalytisch aktive Zusammensetzung eingelagert werden kann. Die Poren können vollständig, vorzugsweise aber nur teilweise mit der Zusammensetzung gefüllt sein. Die Poren der Eigenporosität haben einen Durchmesser von gewöhnlich 10 bis 3000 nm, während der Porendurchmesser der Sekundärporen im Bereich von 4000 bis 60 000 nm liegt. Die Gesamtporosität des Scherbens, bestehend aus Primär- und Sekundärporosität der Zellenwände, beträgt vorzugsweise 30 bis 70%. Gegebenenfalls können der keramischen Rohmasse für den Trägerkörper mineralische Fasern zugesetzt werden, um dem stranggepreßten Trägerkörper eine erhöhte Standfestigkeit nach dem Formen zu verleihen. Für diesen Zweck eignen sich z.B. Fasern aus Glas, Steinwolle, Mullit oder Aluminiumoxid.

Zur Herstellung der aktiven Katalysatorbeschichtung werden die Ausgangskomponenten A), B), C) und gegebenenfalls D) in Form von hydrolysierbaren (d.h. mit Wasser zum Oxid oder Hydroxid zersetzbaren) und in organischen Lösungsmitteln löslichen Verbindungen eingesetzt. Für diesen Zweck geeignete Verbindungen sind z.B. Halogenide (z.B. Chloride), Nitrate, Sulfate, Carboxylate (z.B. Acetate), Acetylacetonate und Alkoholate (z.B. Methylate, Ethylate, Isopropylate und n-Butylate).

Als Lösungsmittel eignen sich nicht-wässrige, organische Lösungsmittel, z.B. Alkohole, wie Methanol, Ethanol, n-Propanol, Isopropanol oder n-Butanol, Ether, wie Dimethoxyethan, Ester, wie Dimethylglykolacetat, und Ketone, wie Aceton oder Methylethylketon.

Zur Herstellung des Vorkondensats werden die Ausgangskomponenten im gewünschten Mischungsverhältnis mit einer geringeren Wassermenge als der zur vollständigen Hydrolyse der Verbindungen stöchiometrisch erforderlichen Menge in dem organischen Lösungsmittel umgesetzt.

Vorzugsweise erfolgt die Vorkondensation in Gegenwart eines Katalysators. Geeignete Katalysatoren sind Protonen oder Hydroxylionen abspaltende Verbindungen und Amine. Spezielle Beispiele für verwendbare Katalysatoren sind organische und anorganische Säuren, wie Salzsäure, Schwefelsäure, Phosphorsäure, Ameisensäure oder Essigsäure, sowie organische oder anorganische Basen, wie Ammoniak, Alkali- oder Erdalkalimetallhydroxide, z.B. Natrium-, Kalium- oder Calciumhydroxid, und im Reaktionsmedium lösliche Amine, z.B. niedere Alkylamine oder Alkanolamine. Hierbei sind flüchtige Säuren und Basen, insbesondere Salzsäure, Ammoniak und Triethylamin, besonders bevorzugt. Die Gesamt-Katalysatorkonzentrationkann z.B. bis zu 3 Mol/Liter betragen.

Die Vorkondensation wird üblicherweise bei Temperaturen von Raumtemperatur bis zum Siedepunkt des verwendeten organischen Lösungsmittels, vorzugsweise bei Raumtemperatur, durchgeführt.

Die Vorkondensation wird so weit geführt, daß die entstehende Vorkondensatlösung noch dünnflüssige Konsistenz hat.

Die erhaltene Vorkondensatlösung kann als solche auf den Katalysator-Trägerkörper aufgetragen werden, worauf man den Hydrolyse- und Kondensationsprozeß, z.B. in wasserdampfhaltiger Atmosphäre, zu Ende führt.

Alternativ setzt man den Hydrolyse- und Kondensationsprozeß in der Vorkondensatlösung direkt fort, indem man mindestens die zur Hydrolyse der verbliebenen hydrolysierbaren Komponenten erforderliche Wassermenge, meist jedoch eine überstöchiometrische Wassermenge, zugibt.

Die Weiterkondensation erfolgt gegebenenfalls in Gegenwart eines der vorstehend genannten Katalysatoren.

Die Gesamt-Katalysatorkonzentration kann z.B. bis zu 5 Mol/Liter betragen.

Die Weiterkondensation wird bei Temperaturen von Raumtemperatur bis zum Siedepunkt des verwendeten Lösungmittels durchgeführt und zwar bis zu einer Viskosität der Lösung, die noch ein Aufbringen auf den Katalysator-Trägerkörper gestattet.

Das Beschichten des Trägerkörpers mit der Vorkondensat-oder Weiterkondensat-Lösung kann nach üblichen Methoden erfolgen, z.B. durch Tauchen, Imprägnieren oder Sprühen. Die Beschichtung kann bei Atmosphärendruck, Unter- oder Überdruck an der Luft oder unter Inertgas durchgeführt werden.

Der beschichtete Trägerkörper wird anschließend getrocknet, um das Lösungsmittel zu verflüchtigen, vorzugsweise 1 bis 24 Stunden bei 50 bis 200° C. Der getrocknete Trägerkatalysator wird dann wärmebehandelt, vorzugsweise 1 bis 24 Stunden bei einer Temperatur von 200 bis 500° C, insbesondere 300° C.

Bei dem auf diese Weise erhaltenen Trägerkatalysator beträgt die Beladung des Trägerkörpers mit aktiver Katalysatorbeschichtung vorzugsweise 0,1 bis 30 Gewichtsprozent, insbesondere 10 bis 20 Gewichtsprozent, bezogen auf den unbeschichteten Trägerkörper. Die aktive Beschichtung ist röntgenamorph und hat eine spezifische Oberfläche von gewöhnlich 50 bis 500 m²/g, vorzugsweise 150 bis 350 m²/g.

Der erfindungsgemäße Trägerkatalysator kann zur katalytischen Reduktion von Stickoxiden und insbesondere zur Entstickung von Verbrennungsabgasen verwendet werden. Die behandelten Gasgemische enthalten im allgemeinen Stickstoff, Sauerstoff, Kohlenmonoxid, Kohlendioxid, Stickoxide und gegebenenfalls Schwefeldioxid. Zu den in unschädliche Gase, wie z.B. Stickstoff, umzuwandelnden Stickoxiden zählen z.B. $NO$, $N_2O_3$, $NO_2$, $N_2O_4$ und $N_2O_5$.

Die Reduktion der Stickoxide erfolgt vorzugsweise in Gegenwart von Ammoniak, dessen Menge sich nach dem Gehalt des behandelten Gasgemisches an Stickoxiden richtet. Gewöhnlich werden 0,5 bis 5 Mol Ammoniak pro 1 Mol Stickoxid eingesetzt.

Die Anwesenheit von Sauerstoff begünstigt die Reduktion von Stickstoffmonoxid (NO) in Gegenwart von Ammoniak. Bei höheren Stickoxiden als NO ist die Anwesenheit von Sauerstoff nicht unbedingt erforderlich.

Die Stickoxidreduktion kann bei Temperaturen von z.B. 100 bis 450° C bei Atmosphärendruck oder Überdruck durchgeführt werden.

Der erfindungsgemäße Trägerkatalysator hat gegenüber herkömmlichen Vollkatalysatoren und Trägerkatalysatoren unter anderem die folgenden Vorteile:

1. Der Trägerkörper ist eine hochporöse verschleißfeste Keramik mit niedrigem Eigengewicht (ca. 400 kg/cbm) und hohen freien Querschnitten (mindestens 80%), wodurch ein geringer Strömungswiderstand mit damit verbundenen Energieeinsparungen beim Gastransport erzielt werden.

2. Die Hauptmenge der katalytisch aktiven Substanz ist aufgrund des Auftragens in gelöstem Zustand in die Poren des Trägers eingebettet, während bei bekannten Metalloxid-Trägerkatalysatoren nur eine oberflächliche Beschichtung mit einer Metalloxid-Dispersion erfolgt.

3. Die in den Träger eingelagerte katalytisch aktive Substanz ist im Gegensatz zu bloßen Oberflächenbeschichtungen gegen mechanischen Verschleiß geschützt.

4. Mit geringen Mengen Katalysatorsubstanz wird eine hohe katalytische Wirkung erzeugt.

5. Es werden nur geringe Absolutmengen an katalytisch aktiver Substanz auf und in den Träger eingebracht, so daß auch der Schwermetallverbrauch äußerst gering ist.

6. Aufgrund der geringen Schwermetallgehalte im Träger kann der gesamte Katalysatorkörper recycled und bei der Herstellung von neuen Trägern verwendet werden.

7. Infolge des stabilen keramischen Trägerkörpers können nicht-verschlissene Katalysatorkörper gereinigt und neu beschichtet werden.

8. Durch die hohe Verschleißfestigkeit des Trägerkatalysators treten nur geringe Mengen an belastenden Stäuben auf, die die Umwelt belasten könnten.

Das folgende Beispiel erläutert die Erfindung.

**Beispiel 1**

Herstellung des Trägerkatalysators

42,6 g (60 Atomprozent Ti) Ti(OC₂H₅)₄, 28,4 g (31,6 Atomprozent V) VO(OC₄H₉)₃ und 10,4 g (8,4 Atomprozent W) WCl₆ werden in 250 ml Methanol gelöst, worauf man 1,35 ml 0,01 m wässrige Salzsäure zugibt und die Lösung 2 Stunden bei Raumtemperatur rührt. Die zugegebene Wassermenge entspricht 1/16 der zur vollständigen Hydrolyse der Komponenten stöchiometrisch erforderlichen Wassermenge.

Ein mit Methanol vorbenetzter Wabenkörper aus Cordierit (ca. 35 cm³) wird 1 Stunde in die vorstehend erhaltene Lösung eingetaucht, dann entnommen und 16 Stunden bei Raumtemperatur in einer Atmosphäre von 30 bis 50% relative Feuchte gelagert. Der erhaltene Trägerkatalysator wird dann 16 Stunden bei 120° C getrocknet und anschließend 5 Stunden bei 300° C wärmebehandelt.

Entstickung von Verbrennungsabgasen.

Der beschichtete Wabenkörper wird in einen elektrisch beheizbaren Strömungsreaktor eingebracht, in den aus den folgenden Reingasen aufgebaute Gasgemische eingeleitet werden: Stickstoff, Sauerstoff, Stickstoffmonoxid, Ammoniak, Schwefeldioxid. Die Reingase werden hierbei Stahldruckflaschen entnommen,

4

in eine Mischstrecke dosiert und über eine vorgeschaltete Vorwärmzone dem Katalysator zugeführt.

Der Gasvolumenstrom im Verhältnis zum Katalysatorvolumen (Raumgeschwindigkeit) beträgt 1500 $h^{-1}$. Die Messungen werden bei Temperaturen von 200 bis 360 °C mit bzw. ohne Zudosierung von Sauerstoff durchgeführt.

Die NO-Minderung (%) wird anhand der in den Reaktor ein- bzw. austretenden Gase mit Analysatoren (z.B. Chemolumineszenz, chemische Sensoren) bzw. naßchemisch ermittelt. Die Ergebnisse sind in der folgenden Tabelle I genannt:

TABELLE I

| $T_{kat}$ (°C) | NO-Eingang (ppm) | $O_2$-Gehalt (%) | $NH_3$:NO | NO-Minderung (%) |
|---|---|---|---|---|
| 240 | 1000 | - | 0,65 | 38 |
| 240 |  | - | 1 | 52,6 |
| 280 |  | - | 0,65 | 51,5 |
| 280 |  | - | 1 | 71 |
| 320 |  | - | 0,65 | 48,1 |
| 320 |  | - | 1 | 77,4 |
| 360 |  | - | 0,65 | 51,8 |
| 360 |  | - | 1 | 75,2 |
| 240 | 1000 | 3,1 | 0,65 | 53,7 |
| 240 |  | 3,1 | 1 | 81,6 |
| 280 |  | 3,2 | 0,65 | 52 |
| 280 |  | 3,2 | 1 | 89,5 |
| 320 |  | 2,9 | 0,65 | 49 |
| 320 |  | 3 | 1 | 87,7 |
| 360 |  | 3,1 | 0,65 | 52,3 |
| 360 |  | 3,1 | 1 | 80 |

BEISPIELE 2 bis 4

| Zusammensetzung der katalytisch aktiven Komponente aus den Oxiden von Ti, W und V | | | | | | |
|---|---|---|---|---|---|---|
| Beispiel | Zusammensetzung (Atom-%) | | | eingesetzte Ausgangsverbindungen | | |
| | Ti | W | V | $Ti(OC_2H_5)_4$ (g) | $WCl_6$ (g) | $VO(OC_4H_9)_3$ (g) | 0,01 m HCl (ml) |
| 2 | 72 | 8,4 | 19,6 | 51,1 | 10,4 | 17,6 | 22,6 |
| 3 | 76 | 20 | 4,0 | 54,0 | 24,8 | 3,6 | 24,9 |
| 4 | 83 | 8,4 | 8,6 | 58,9 | 10,4 | 7,7 | 23,3 |

$Ti(OC_2H_5)_4$, $VO(OC_4H_9)_3$ und $WCl_6$ werden in 250 ml Methanol gelöst. 1/16 des angegebenen Volumens an 0,01 m HCl werden zugegeben und 2 h bei Raumtemperatur gerührt. Die zugegebene Wassermenge entspricht 1/16 der zur vollständigen Hydrolyse der Ausgangsverbindungen stöchiometrisch erforderlichen Menge.

Zur Beschichtung eines Cordierit-Wabenkörpers wird in die Beschichtungslösung die restliche Menge an HCl gegeben, worauf man den Ansatz mit 750 ml Methanol verdünnt und 30 min rührt. Die erhaltene Lösung wird für die Tauchbeschichtung des Trägers eingesetzt. Eine Zwischenlagerung in feuchter Atmosphäre bei Raumtemperatur kann entfallen. Um eine ausreichende Katalysatorbeladung des Trägers zu erreichen, wird der Tauchvorgang nach kurzer (2 h) Zwischentrocknung bei 120 °C gegebenenfalls mehrfach wiederholt (Kontrolle durch Auswiegen). Die Temperbedingungen entsprechen denen von Beispiel 1.

Die Messung der katalytischen Aktivität erfolgt unter den Bedingungen von Beispiel 1.

Für den mit 8,9 Gew.-% der katalytischen Zusammensetzung aus Beispiel 2 beschichteten Träger werden die in Tabelle II genannten Meßdaten erhalten.

5

TABELLE II

| $T_{kat}$ (°C) | NO-Eingang ppm | $O_2$-Gehalt (%) | $NH_3$ : NO | NO-Minderung (%) |
|---|---|---|---|---|
| 166 | 1000 | 3 | 0,66 | 33,6 |
| 200 | | | | 49,1 |
| 240 | | | | 65,6 |
| 280 | | | | 86,8 |
| 320 | | | | 91,5 |
| 320 | | | 0,96 | 92,5 |
| 360 | | | 0,66 | 91,5 |
| 400 | | | | 96,2 |

Für den mit 7,3 Gew.-% der katalytischen Zusammensetzung aus Beispiet 3 beschichteten Träger werden die in Tabelle III genannten Meßdaten ermittelt.

TABELLE III

| $T_{kat}$ (°C) | NO-Eingang ppm | $O_2$-Gehalt (%) | $NH_3$ : NO | NO-Minderung (%) |
|---|---|---|---|---|
| 160 | 600 | 0 | 0,66 | 32,5 |
| 180 | | | | 44,7 |
| 240 | | | | 56,1 |
| 280 | | | | 68,4 |
| 320 | | | | 75,4 |
| 360 | | | | 78,9 |
| 400 | | | | 78,9 |
| 450 | | | | 82,5 |

Für den mit 14,4 Gew.-% der katalytischen Zusammensetzung aus Beispiel 4 beschichteten Träger werden die in Tabelle IV genannten Meßdaten ermittelt.

TABELLE IV

| $T_{kat}$ (°C) | NO-Eingang (ppm) | $O_2$-Gehalt (%) | $NH_3$ : NO | NO-Minderung (%) |
|---|---|---|---|---|
| 120 | 980 | 3 | 0,89 | 26,5 |
| 180 | | | | 58,2 |
| 260 | | | | 85,4 |
| 320 | 950 | | 0,92 | 90,0 |
| 320 | | | 1,01 | 92,6 |
| 320 | 980 | | 0,98 | 92,9 |
| 320 | 990 | | 0,97 | 93,9 |
| 360 | | | | 94,2 |
| 400 | | | | 94,2 |

Mit diesem Trägerkatalysator wurde auch ein technischer Pilotversuch durchgeführt:

Katalysatorvolumen: 11,4 l

Raumgeschwindigkeit : 3000 $h^{-1}$

Erdgasfeuerung mit einer NO-Einspeisung von 800 ppm Katalysatortemperatur: 330° C

Sauerstoffgehalt: 6,2 Vol.-%

Verhältnis $NH_3$ /NO = 1

BEISPIEL 5

Zusammensetzung der katalytisch aktiven Komponente aus den Oxiden von Ti, Cr und V

Herstellung eines Trägerkatalysators mit einer katalytischen Komponente der Zusammensetzung (in Atom-%)

83 Ti; 8,4 Cr; 8,6 V

200 g $Ti(OC_2H_5)_4$ (83 Atom-% Ti) und 24,6 g $VO(OC_4H_9)_3$ (8,6 Atom-% V) werden gemischt. Die Mischung wird mit 13 g $CrCl_3$ (8,4 Atom-% Cr) 2 h am Rückfluß gekocht, dann ist alles $CrCl_3$ gelöst. Es werden 1000 ml Methanol zugegeben. Die resultierende dunkle Lösung wird als Beschichtungslösung eingesetzt.

Die Beschichtung eines Cordierit-Wabenkörpers erfolgt nach dem in Beispiel 1 beschriebenen Verfahren: Zwischenbehandlung 2 h bei 20 °C und 65 % rel. Feuchte, Zwischentrocknung 30 min bei 120 °C; der Beschichtungsvorgang wird fünfmal wiederholt. Nach dem abschließenden Tempern 5 h bei 400 °C sind auf dem Träger 14,5 Gew.-% katalytischen Materials aufgebracht.

Die Messung der katalytischen Aktivität erfolgt wie in Beispiel 1. Hierbei werden die in Tabelle V genannten Meßdaten ermittelt.

TABELLE V

| $T_{kat}$ (°C) | NO-Eingang (ppm) | $O_2$-Gehalt (%) | $NH_3$ : NO | NO-Minderung (%) |
|---|---|---|---|---|
| 160 | 1000 | 0 | 0,66 | 5,2 |
| 200 | | | | 17,7 |
| 240 | | | | 28,1 |
| 320 | | | | 58,3 |
| 360 | | | | 68,8 |
| 400 | | | | 82,3 |

BEISPIEL 6

Zusammensetzung der katalytisch aktiven Komponente aus den Oxiden von Ti, Mo und V

Herstellung eines Trägerkatalysators mit einer katalytischen Komponente der Zusammensetzung (in Atom-%)

83 Ti; 8,4 Mo; 8,6 V

189 g Ti $(OC_2H_5)_4$ (83 Atom-% Ti) und 24,4 g $VO(OC_4H_9)_3$ (8,6 Atom-% V) werden gemischt und in einem Eisbad gekühlt. Darin werden 22,9 g $MoCl_5$ (8,4 Atom-% Mo) gelöst und die Mischung mit 1000 ml Methanol verdünnt. Nach Zusatz von 3,7 ml Wasser wird 80 min gerührt, dann werden unter Rühren noch 56,3 ml Wasser zugesetzt. Es resultiert eine braune, viskose Lösung, die als Beschichtungslösung eingesetzt wird.

Die Beschichtung eines Cordierit-Wabenkörpers erfolgt wie in den Beispielen 2 bis 4. Nach fünfmaligem Beschichten und einer Temperung (5 h, 400 °C) hat der Träger 15 Gew.-% katalytisches Material aufgenommen.

Die Messung der katalytischen Aktivität erfolgt wie in Beispiel 1. Hierbei werden die in Tabelle VI genannten Meßdaten ermittelt.

TABELLE VI

| $T_{kat}$ (°C) | NO-Eingang (ppm) | $O_2$-Gehalt (%) | $NH_3$ : NO | NO-Minderung (%) |
|---|---|---|---|---|
| 120 | 1000 | O | 0,7 | 21,5 |
| 160 | | | | 42,1 |
| 200 | | | | 56,1 |
| 240 | | | | 77,8 |
| 280 | | | | 86,9 |
| 320 | | | | 90,0 |
| 360 | | | | 92,9 |
| 400 | | | | 94,0 |

BEISPIEL 7

Zusammensetzung der katalytisch aktiven Komponente aus den Oxiden von Si, W und V

Herstellung eines Trägerkatalysators mit einer katalytischen Komponente der Zusammensetzung (in Atom-%)

83 Si; 8,4 W; 8,6 V

130 g Tetraethoxysilan $Si(OC_2H_5)_4$ (83 Atom-% Si) und 19,5 g $VO(OC_4H_9)_3$ (8,6 Atom-% V) werden gemischt. Darin werden 28,4 g $WCl_6$ (8,4 Atom-% W) gelöst und die Mischung mit 1500 ml Ethanol verdünnt.

Nach Zusatz von 3,5 ml Wasser wird 60 min gerührt, dann werden unter Rühren noch 52 ml Wasser zugesetzt. Die resultierende gelbbraune Lösung wird als Beschichtungslösung eingesetzt.

Die Beschichtung eines Cordierit-Wabenkörpers erfolgt wie in den Beispielen 2 bis 4. Nach zehnmaligem Beschichten und einer Temperung (5 h/400 °C) hat der Träger 15 Gew.-% katalytisches Material aufgenommen.

Die Messung der katalytischen Aktivität erfolgt wie in Beispiel 1. Hierbei werden die in Tabelle VII genannten Meßdaten ermittelt.

TABELLE VII

| $T_{kat}$ (°C) | NO-Eingang (ppm) | $O_2$-Gehalt (%) | $NH_3$ : NO | NO-Minderung (%) |
|---|---|---|---|---|
| 120 | 950 | 0 | 0,7 | 5,2 |
| 120 | 950 | 2,9 | 0,7 | 11,8 |
| 240 | 950 | 0 | 0,7 | 21,3 |
| 240 | 950 | 2,8 | 0,7 | 66,5 |
| 240 | 950 | 2,9 | 1,0 | 87,2 |
| 360 | 950 | 2,9 | 0,7 | 63,8 |
| 360 | 950 | 2,8 | 1,0 | 88,4 |

**Patentansprüche**

1. Trägerkatalysator für die Stickoxidreduktion mit einem festen porösen Trägerkörper, auf den eine Metalloxide enthaltende, aktive Katalysatorbeschichtung aufgebracht ist, dadurch **gekennzeichnet,** daß die aktive Katalysatorbeschichtung nach dem Sol-Gel-Prozeß erhalten worden ist, indem man

a) eine Lösung von löslichen und hydrolysierbaren Verbindungen
A) mindestens eines Elementes aus der Gruppe Al, Si und Ti;
B) mindestens eines Elementes aus der Gruppe V, Mn, Fe, Co und Ni;
C) mindestens eines Elementes aus der Gruppe Cr, Mo, W und Sn;
D) gegebenenfalls mindestens eines Elementes aus der Gruppe Mg, Cu, Zn, La, Ce und Gd;

EP 0 271 919 B1

wobei der Anteil dieser Komponenten, ausgedrückt als Atomprozent der Elemente, 50 bis 98 Prozent A), 1 bis 50 Prozent B), 0,5 bis 20 Prozent C) und 0 bis 5 Prozent D) und die Summe der Atomprozente 100% beträgt,

in einem organischen Lösungsmittel mit einer geringeren Wassermenge als der zur vollständigen Hydrolyse der Verbindungen stöchiometrisch erforderlichen Menge, gegebenenfalls in Gegenwart eines sauren oder basischen Katalysators, umsetzt;
b) gegebenenfalls das entstandene Vorkondensat mit der zur Hydrolyse der verbliebenen hydrolysierbaren Komponenten erforderlichen Wassermenge, gegebenenfalls in Gegenwart eines sauren oder basischen Katalysators, weiterkondensiert;
c) einen festen porösen Katalysator-Trägerkörper mit der Lösung des Vorkondensats aus Stufe a) oder des weiterkondensierten Produkts aus Stufe b) beschichtet, wobei im erstgenannten Fall eine Weiterkondensation des Vorkondensats auf dem beschichteten Trägerkörper durchgeführt wird; und
d) den beschichteten Trägerkörper trocknet und wärmebehandelt.

2. Trägerkatalysator nach Anspruch 1, dadurch gekennzeichnet, daß die aktive Katalysatorbeschichtung aus Oxiden von Ti, V und W besteht.

3. Trägerkatalysator nach Anspruch 1 oder 2, dadurch gekennzeichnet, daß der poröse Trägerkörper ein gebrannter keramischer Scherben von wabenförmiger Struktur mit einer freien Querschnittsfläche von mindestens 80% ist.

4. Trägerkatalysator nach Anspruch 3, dadurch gekennzeichnet, daß der keramische Scherben aus Cordierit und/oder Mullit und/oder Steinzeug und/oder Aluminiumoxid besteht.

5. Trägerkatalysator nach einem der Ansprüche 1 bis 4, dadurch gekennzeichnet, daß die Beladung des Trägerkörpers mit der aktiven Katalysatorbeschichtung 0,1 bis 30 Gewichtsprozent, bezogen auf den unbeschichteten Trägerkörper, beträgt.

6. Trägerkatalysator nach einem der Ansprüche 1 bis 5, dadurch gekennzeichnet, daß die aktive Katalysatorbeschichtung im wesentlichen amorph ist.

7. Trägerkatalysator nach einem der Ansprüche 1 bis 6, dadurch gekennzeichnet, daß die aktive Katalysatorbeschichtung eine spezifische Oberfläche von 50 bis 500 $m^2/g$ hat.

8. Verfahren zur Herstellung des Trägerkatalysators nach Anspruch 1, dadurch gekennzeichnet, daß man
a) eine Lösung von löslichen und hydrolysierbaren Verbindungen
A) mindestens eines Elementes aus der Gruppe Al, Si und Ti;
B) mindestens eines Elementes aus der Gruppe V, Mn, Fe, Co und Ni;
C) mindestens eines Elementes aus der Gruppe Cr, Mo, W und Sn;
D) gegebenenfalls mindestens eines Elementes aus der Gruppe Mg, Cu, Zn, La, Ce und Gd;
wobei der Anteil dieser Komponenten, ausgedrückt als Atomprozent der Elemente, 50 bis 98 Prozent A), 1 bis 50 Prozent B), 0,5 bis 20 Prozent C) und 0 bis 5 Prozent D) und die Summe der Atomprozente 100% beträgt,

in einem organischen Lösungsmittel mit einer geringeren Wassermenge als der zur vollständigen Hydrolyse der Verbindungen stöchiometrisch erforderlichen Menge, gegebenenfalls in Gegenwart eines sauren oder basischen Katalysators, umsetzt;
b) gegebenenfalls das entstandene Vorkondensat mit der zur Hydrolyse der verbliebenen hydrolysierbaren Komponenten erforderlichen Wassermenge, gegebenenfalls in Gegenwart eines sauren oder basischen Katalysators,
weiterkondensiert;
c) einen festen porösen Katalysator-Trägerkörper mit der Lösung des Vorkondensats aus Stufe a) oder des weiterkondensierten Produkts aus Stufe b) beschichtet, wobei im erstgenannten Fall eine Weiterkondensation des Vorkondensats auf dem beschichteten Trägerkörper durchgeführt wird; und
d) den beschichteten Trägerkörper trocknet und wärmebehandelt.

9

9. Verfahren nach Anspruch 8, dadurch gekennzeichnet, daß man die Wärmebehandlung des beschichteten Trägerkörpers bei 200 bis 500°C durchführt.

10. Verwendung des Trägerkatalysators nach einem der Ansprüche 1 bis 7 zur Reduktion von Stickoxiden, insbesondere zur Entstickung von Verbrennungsabgasen.

**Claims**

1. A supported catalyst for the reduction of nitrogen oxide comprising a solid porous supporting body onto which an active catalyst coating containing metal oxides is deposited, wherein said active catalyst coating has been obtained according to the sol-gel process by

   a) reacting a solution of soluble and hydrolyzable compounds of
      A) at least one element of the group consisting of Al, Si and Ti;
      B) at least one element of the group consisting of V, Mn, Fe, Co and Ni;
      C) at least one element of the group consisting of Cr, Mo, W and Sn;
      D) optionally, at least one element of the group consisting of Mg, Cu, Zn, La, Ce and Gd;

   with the proportion of said components, expressed as atomic percentages of the elements, being 50 to 98 percent of A), 1 to 50 percent of B), 0.5 to 20 percent of C), and 0 to 5 percent of D), the total of the atomic percentages amounting to 100%,

   in an organic solvent with a quantity of water smaller than the quantity stoichiometrically required for the complete hydrolysis of the compounds, optionally in the presence of an acidic or basic catalyst;
   b) optionally further condensing the precondensate produced with the quantity of water required for the hydrolysis of the remaining hydrolyzable components, optionally in the presence of an acidic or basic catalyst;
   c) coating a solid porous catalyst supporting body with the solution of the precondensate of step a) or of the further condensed product of step b), with - in the first case - a further condensation of the precondensate being carried out on the coated supporting body; and
   d) drying and heat-treating the coated supporting body.

2. The supported catalyst according to claim 1 wherein the active catalyst coating is composed of oxides of Ti, V and W.

3. The supported catalyst according to claim 1 or 2 wherein the porous supporting body is a fired ceramic body having honeycomb structure and a free cross-sectional area of at least 80%.

4. The supported catalyst according to claim 3 wherein the ceramic body consists of cordierite and/or mullite and/or stoneware and/or aluminium oxide.

5. The supported catalyst according to any of claims 1 to 4 wherein the loading of the supporting body with the active catalyst coating is 0.1 to 30 percent by weight in relation to the uncoated supporting body.

6. The supported catalyst according to any of claims 1 to 5 wherein the active catalyst coating is essentially amorphous.

7. The supported catalyst according to any of claims 1 to 6 wherein the active catalyst coating has a specific surface area of 50 to 500 $m^2/g$.

8. A process for producing a supported catalyst according to claim 1 wherein
   a) a solution of soluble and hydrolyzable compounds of
      A) at least one element of the group consisting of Al, Si and Ti;
      B) at least one element of the group consisting of V, Mn, Fe, Co and Ni;
      C) at least one element of the group consisting of Cr, Mo, W and Sn;
      D) optionally, at least one element of the group consisting of Mg, Cu, Zn, La, Ce and Gd;
   with the proportion of said components, expressed as atomic percentages of the elements, being 50

10

to 98 percent of A), 1 to 50 percent of B), 0.5 to 20 percent of C), and 0 to 5 percent of D), the total of the atomic percentages amounting to 100%, is reacted in an organic solvent with a quantity of water smaller than the quantity stoichiometrically required for the complete hydrolysis of the compounds, optionally in the presence of an acidic or basic catalyst;

b) the precondensate produced is optionally further condensed with the quantity of water required for the hydrolysis of the remaining hydrolyzable components, optionally in the presence of an acidic or basic catalyst;

c) a solid porous catalyst supporting body is coated with the solution of the precondensate of step a) or of the further condensed product of step b), with - in the first case - a further condensation of the precondensate being carried out on the coated supporting body; and

d) the coated supporting body is dried and heat-treated.

9. The process according to claim 8 wherein the heat-treatment of the coated supporting body is carried out at 200 to 500° C.

10. The use of the supported catalyst according to any of claims 1 to 7 for reducing nitrogen oxides, in particular for the denitrification of combustion gases.

**Revendications**

1. Catalyseur sur support pour la réduction des oxydes de l'azote à l'aide d'un corps de support poreux solide, sur lequel est appliqué un revêtement de catalyseur actif contenant des oxydes de métaux , caractérisé en ce que le revêtement de catalyseur actif est obtenu selon le procédé sol-gel , selon lequel on fait réagir

a) une solution de composés solubles et hydrolysables

A) d'au moins un élément du groupe Al , Si et Ti ;

B)d'au moins un élément du groupe V,Mn , Fe , Co et Ni ;

C)d'au moins un élément du groupe Cr , Mo , W et Sn ;

D) éventuellement d'au moins un élément du groupe Mg,Cu,Zn,La,Ce et Gd ;

la proportion de ces constituants , exprimée en pourcentage d'atomes des éléments , étant de 50 à 98 % de A, 1 à 50 % de B , 0,5 à 20 % de C et 0 à 5 % de D , et la somme des pourcentages d'atomes représentant 100 % , dans un solvant organique contenant une quantité d'eau inférieure à celle stoechiométriquement nécessaire pour une hydrolyse complète des composés, éventuellement en présence d'un catalyseur acide ou basique ;

b) on soumet éventuellement le précondensat ainsi obtenu à la poursuite de la condensation avec la quantité d'eau nécessaire pour l'hydrolyse des constituants hydrolysables restants , éventuellement en présence d'un catalyseur acide ou basique ;

C) on enduit un corps solide poreux,support de catalyseur , avec la solution du précondensat provenant de l'étape (a) ou du produit résultant de la poursuite de la condensation de l'étape (b) ,et,dans le premier cas cité,on effectue une poursuite de la condensation du précondensat sur le corps de support revêtu ; et

d) on sèche et traite par la chaleur le corps de support revêtu .

2. Catalyseur sur support selon la revendication 1 , caractérisé en ce que le revêtement de catalyseur actif consiste en des oxydes de Ti, V et W .

3. Catalyseur sur support selon la revendication 1 ou 2 , caractérisé en ce que le corps de support poreux est une pâte céramique cuite à structure en nids d'abeilles ayant une surface de section transversale libre d'au moins 80 % .

4. Catalyseur sur support selon la revendication 3 , caractérisé en ce que la pâte céramique consiste en de la cordiérite et/ou en de la mullite et/ou du grès cérame et/ou en de l'oxyde d'aluminium .

5. Catalyseur sur support selon l'une des revendications 1 à 4 , caractérisé en ce que la charge du corps de support par le revêtement de catalyseur actif représente 0,1 à 30 % en poids , sur la base du corps de support non revêtu .

6. Catalyseur sur support selon l'une des revendications 1 à 5 , caractérisé en ce que le revêtement de catalyseur est essentiellement amorphe .

7. Catalyseur sur support selon l'une des revendications 1 à 6 , caractérisé en ce que le revêtement de catalyseur actif a une surface spécifique de 50 à 500 m²/ g .

8. Procédé pour préparer le catalyseur sur support selon la revendication 1 , caractérisé en ce que :
   (a) on fait réagir une solution de composés solubles et hydrolysables
   A) d'au moins un des éléments du groupe Al , Si et Ti ;
   B) d'au moins un élément du groupe V ,Mn , Fe ,Co et Ni ;
   C) d'au moins un élément du groupe Cr , Mo , W et Sn ;
   D) éventuellement d'au moins un élément du groupe Mg , Cu ,Zn , La , Ce et Gd ;
   la proportion de ces constituants , exprimée en pourcentage atomique des éléments étant de 50 à 98 % de (A) , 1 à 50 % de (B) , 0,5 à 20 % de (C) et 0 à 5 % de (D) , et la somme des pourcentages d'atomes formant 100 %, dans un solvant organique avec une quantité d'eau inférieure à la quantité stoechiométriquement nécessaire pour l'hydrolyse complète des composés, éventuellement en présence d'un catalyseur acide ou basique ;
   (b) on soumet éventuellement le précondensat ainsi obtenu à la poursuite de la condensation avec la quantité d'eau nécessaire pour l'hydrolyse des constituants hydrolysables restants , éventuellement en présence d'un catalyseur acide ou basique ;
   (c) on enduit un sorps solide poreux , support de catalyseur , avec la solution du précondensat provenant de l'étape (a) ou du produit résultant de la poursuite de la condensation de l'étape (b) ,et , dans le premier cas cité , on effectue une poursuite de la condensation du précondensat sur le corps de support revêtu ; et
   (d) on sèche et traite par la chaleur le corps de support revêtu .

9. Procédé selon la revendication 8 , caractérisé en ce qu'on conduit entre 200 et 500 ˚C le traitement , par la chaleur , du corps de support revêtu .

10. Utilisation du catalyseur sur support selon l'une des revendications 1 à 7 pour la réduction d'oxydes de l'azote , notamment pour éliminer l'azote de gaz d'échappement de combustion .